# EUROPÄISCHE PATENTSCHRIFT

(11) **EP 0 355 723 B1**
(45) Veröffentlichungstag und Bekanntmachung des Hinweises auf die Patenterteilung: **18.11.1993**
(21) Anmeldenummer: 89115217.5
(22) Anmeldetag: 18.08.1989
(51) Int. Cl.: G05D 7/06, F16K 31/02

(54) **Einrichtung zur stetigen Beeinflussung eines Fluidstromes, insbesondere in einem Ventil**
Device for permanently affecting a fluid-stream, especially one in a valve
Dispositif pour influencer constamment un flux de liquide, en particulier dans une soupape

(30) Priorität: 25.08.1988 DE 3828763; 03.08.1989 DE 3925686
(43) Veröffentlichungstag der Anmeldung: 28.02.1990
(73) Patentinhaber: HYDRAULIK-RING ANTRIEBS- UND STEUERUNGSTECHNIK GmbH, D-72622 Nürtingen (DE)
(72) Erfinder:
(74) Vertreter: Becker, Thomas, Dr., Dipl.-Ing.

(56) Entgegenhaltungen:
- DE-A- 2 523 600
- DE-A- 3 233 161
- DE-A- 3 714 337
- GB-A- 1 240 286
- US-A- 4 466 571

## Beschreibung

Die Erfindung betrifft eine Einrichtung zur stetigen Beeinflussung eines Fluidstromes, insbesondere in einem Ventil, nach dem Oberbegriff des Anspruches 1.

Es sind Einrichtungen in Form von Proportional-Magnetventilen bekannt, deren Kolbenschieber eine bestimmte Sollage einnehmen soll. Im Betrieb kommt es vor, daß der Kolbenschieber seine Sollage verläßt, beispielsweise infolge Druckschwankungen, so daß der gewünschte Sollwert nicht eingehalten werden kann. Die bekannten Proportional-Magnetventile haben eine verhältnismäßige hohe Nachgiebigkeit, d.h. sie reagieren erst bei größeren Änderungen des Sollwerts. Kleinste Änderungen des Sollwertes werden von ihnen nicht oder nur mit Verzögerung erfaßt und entsprechend ausgeregelt. Diese Magnetventile haben darum eine verhältnismäßig große Hysterese. Außerdem haben die Proportionalmagnete nur eine geringe Steifigkeit.

Es sind auch Einrichtungen in Form von Servoventilen bekannt, deren Ansteuerung elektro-magnetisch mit sogenannten Torque-Motoren erfolgt. Sie erzeugen nur relativ kleine Stellkräfte, was eine direkte Ansteuerung von z.B. Kolbenschiebern im allgemeinen nicht zuläßt. Servoventile sind deshalb meist mit sogenannten Düsen-Prallplattensystemen als erste Steuerstufe versehen. Die besondere Verschmutzungsempfindlichkeit dieser Systeme sowie die des Torque-Motors erzwingen eine sehr feine Filterung des Fluidmediums. Eine weitere Folge der geringen Stellkraft ist die geringe Steifigkeit sowie die Unmöglichkeit zum Bau einstufiger Ventile. Weiterhin wird in diesen Servoventilen meist eine mechanische Rückführung zur Lageregelung verwendet. Diese erfordert eine sehr aufwendige Konstruktion und Fertigung und läßt auch nicht die einfache Verstell- und Anpaßfähigkeit von elektronischen Reglern zu.

Es ist auch eine Einrichtung bekannt (DE-OS 32 33 161), die als Wegeventil ausgebildet ist und Piezoelemente aufweist, mit denen ein Kolbenschieber des Ventiles zwischen zwei mechanisch definierten Endpunkten hin- und hergeschaltet wird. Das Piezoelement hat eine verhältnismäßig große Hysterese, die sich aber bei einem solchen Schaltventil nicht nachteilig bemerkbar macht, weil die geometrische Lage des Kolbenschiebers durch mechanische Anschläge bestimmt wird. Für eine stetige gezielte Verstellbarkeit des Kolbenschiebers sind die Piezoelemente wegen ihrer großen Hysterese nicht geeignet.

Bei der gattungsgemäßen Einrichtung (US-PS 40 61 155) wird der Stellteil hydraulisch verstellt. Hierzu ist ein Übersetzer oder Wandler vorgesehen, an dessen beiden Ausgängen eine Druckdifferenz auftritt. Sie ist in der Polarität und Größe dem aufgebrachten elektrischen Signal proportional. Die Druckdifferenz wirkt über Kugeln auf die beiden Enden des Kolbenschiebers, der entsprechend der jeweiligen Druckdifferenz aus seiner neutralen Ausgangslage entsprechend verschoben wird. Das Hydraulikmedium, das zum Verstellen des Kolbenschiebers dient, dehnt sich infolge von Temperaturänderungen aus. Dies bedeutet Änderungen in der Position des Kolbenschiebers; dadurch ist eine Kompensation dieses Temperaturganges erforderlich. Außerdem ist die Zuverlässigkeit durch Leckverluste gefährdet. Es sind darum aufwendige Maßnahmen notwendig, um die Leckverluste auszugleichen. Schließlich sind die Kompressibilität des Hydraulikmediums weitere kritische Faktoren.

Es sind schließlich auch Ventile vorgesehen (DE-OS 37 14 337), bei denen der Stellteil durch ein Piezoelement verstellt wird. Zwischen dem Stellteil, der als Kolbenschieber ausgebildet ist, und dem Piezoelement ist wiederum eine hydraulische Übersetzung vorgesehen, welche die geringe Auslenkung des Piezoelementes in eine größere Auslenkung des Kolbenschiebers übersetzt. Auch bei diesem Ventil ist die Ausdehnung der Hydraulikflüssigkeit durch Temperaturänderungen nachteilig. Ebenso müssen die Leckverluste, die Kompressibilität des Hydraulikmediums und die Problematik der Lufteinschlüsse innerhalb des Übersetzungsraumes beachtet werden.

Der Erfindung liegt die Aufgabe zugrunde, die gattungsgemäße Einrichtung so auszubilden, daß kleinste Änderungen in der Stellgröße der Einrichtung unabhängig von Temperaturänderungen und ohne die Anwendung konstruktiv aufweniger Kompensationsmaßnahmen sofort ausgeglichen werden können, so daß der jeweils vorgegebene Soll-Wert, z.B. die Sollwertlage eines Hauptsteuerkolbens, exakt eingehalten werden kann.

Diese Aufgabe wird bei der gattungsgemäßen Einrichtung erfindungsgemäß mit den kennzeichnenden Merkmalen des Anspruches 1 gelöst.

Bei der erfindungsgemäßen Einrichtung kann das Piezoelement auf Änderungen der jeweiligen Stellgröße augenblicklich reagieren, weil es vom Vergleicher sofort das entsprechende Ausgangssignal erhält. Dadurch wird die Änderung in der Stellgröße augenblicklich beseitigt. Das Piezoelement in Verbindung mit dem Regelkreis bildet ein hochdynamisches Stellglied, das insbesondere für den Einsatz im Proportional- und Servoventilbereich bei direkt- sowie vorgesteuerten Ventilen geeignet ist. Infolge der Anordnung des Piezoelementes im Regelkreis wird das Hystereseverhalten des Piezoelementes nahezu vollständig beseitigt. Da das Piezoelement unmittelbar mit dem Stellteil verbunden ist, also zwischen ihm und dem Stellteil keine elastischen Zwischenglieder, wie etwa Hydraulikmedium, vorhanden sind, müssen auch keine Maßnahmen getroffen werden, um beispielsweise die Ausdehnung des Hydraulikmediums durch Temperaturänderungen oder die Leckverluste des Hydraulikmediums zu kompensieren. Dadurch kann der Stellteil augenblicklich und mit höchster Genauigkeit in die jeweils erforderliche Lage verstellt werden. Somit sind zum Umschalten bzw. Verstellen des Stellteiles nur sehr kurze Verstellzeiten notwendig.

Weitere Merkmale der Erfindung ergeben sich aus den weiteren Ansprüchen, der Beschreibung und den Zeichnungen.

Die Erfindung wird anhand zweier in den Zeichnungen dargestellten Ausführungsbeispiele näher erläutert. Es zeigen
- Fig. 1: im Schnitt ein Ventil einer erfindungsgemäßen Einrichtung,
- Fig. 2: in schematischer Darstellung die erfindungsgemäße Einrichtung,
- Fig. 3: in einem Diagramm die Abhängigkeit der Auslenkung eines Piezoelementes von der jeweils aufgebrachten Spannung,
- Fig. 4: in einem Diagramm die Abhängigkeit des Istwertes des Auslenkweges des Piezoelementes vom Spannungssollwert bei Verwendung der erfindungsgemäßen Einrichtung,
- Fig. 5: im Schnitt ein Ventil einer zweiten Ausführungsform einer erfindungsgemäßen Einrichtung,
- Fig. 6: ein Verbindungsteil zwischen einem Kolbenschieber und einem Piezoelement der erfindungsgemäßen Einrichtung gemäß Fig. 5 in vergrößerter Darstellung.

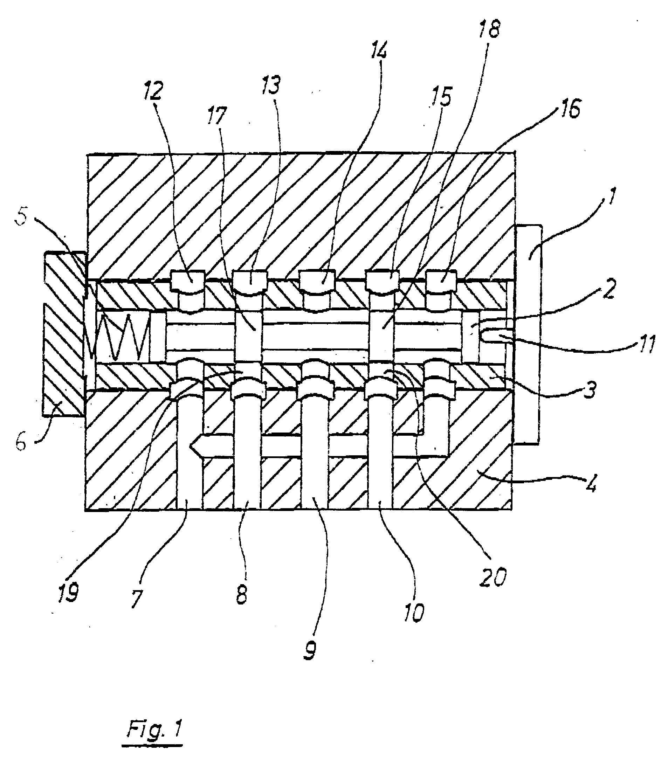

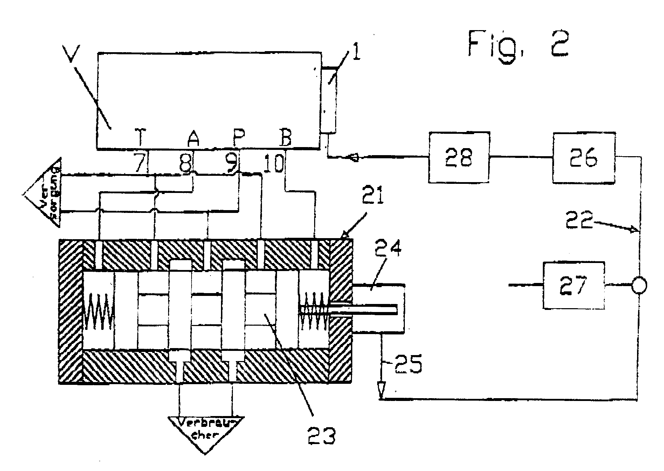

Die Einrichtung dient zur stetigen Beeinflussung fluidischer Ströme und zeichnet sich durch eine nahezu unbegrenzte Einstellempfindlichkeit bei Positionierungen bei gleichzeitig sehr kurzen Stellzeiten aus. Mit der Einrichtung lassen sich Positionen von Stellgliedern, wie beispielsweise Kolbenschiebern von Ventilen, genau einstellen und praktisch verlustfrei halten. Im dargestellten und im folgenden beschriebenen Ausführungsbeispiel nach den Fig. 1 und 2 weist die Einrichtung ein Vorsteuerventil V auf.

Es hat ein Gehäuse 4, in dem sich eine Steuerbuchse 3 mit Steueröffnungen 19 und 20 befindet. In der Steuerbuchse 3 ist ein Kolbenschieber 2 mit Kolbenteilen 17 und 18 verschiebbar. Mit ihm können die Durchlaßquerschnitte der Steueröffnungen 19 und 20 verändert werden. Der Kolbenschieber 2 stützt sich über eine Feder 5 an einem Gehäuseabschluß 6 ab. Die Feder 5 erzeugt im Ausführungsbeispiel die notwendige Rückstellkraft für den Kolbenschieber 2.

Das Gehäuse 4 hat einen mit einem (nicht dargestellten) Vorratsbehälter verbundenen Anschluß 7, einen mit einer (ebenfalls nicht dargestellten) Druckmittelquelle verbundenen Anschluß 9 sowie zwei mit (nicht dargestellten) Verbrauchern verbundene Anschlüsse 8 und 10, die in die Steueröffungen 19 und 20 münden. Sie sind Teil von Ringkanälen 13 und 15. Die Anschlüsse 7 und 9 münden ihrerseits in weitere Ringkanäle 12 und 14.

Der Kolbenschieber 2 wird von einem elektrisch ansteuerbaren Piezoelement 1 verstellt, das im Ausführungsbeispiel einen Übertragungsstößel aufweist, mit dem das Piezoelement 1 am Kolbenschieber 2 anliegt. Das Piezoelement 1 bzw. dessen Übertragungsstößel 11 ist axial fluchtend zum Kolbenschieber 2 angeordnet. Wird das Piezoelement 1 erregt, verschiebt es über den Übertragungsstößel 11 infolge seiner Verformung den Kolbenschieber 2 in der Steuerbuchse 3 gegen die Kraft der Feder 5. Dadurch wird der Durchlaßquerschnitt der Steueröffnungen 19 und 20 verändert, wodurch auch der Fluidstrom von der Druckmittelquelle zum Verbraucher über eine der Steuerkanten und von diesem Verbraucher zurück über die andere Steuerkante zum Vorratsbehälter verändert wird.

Wie sich aus Fig. 2 ergibt, wird mit dem Vorsteuerventil V ein Hauptsteuerventil 21 gesteuert. Das Vorsteuerventil V und das Hauptsteuerventil 21 liegen in einer Regelschaltung 22. Dem Hauptkolben 23 des Hauptsteuerventiles 21 ist ein Wegmeßsystem 24 zugeordnet, mit dem der Ist-Verschiebeweg des Hauptkolbens 23 ermittelt wird. Dieses Wegmeßsystem 24 ist an sich bekannt und soll darum hier nicht näher erläutert werden. Der vom Wegmeßsystem 24 ermittelte Istwert wird über eine Ausgangsleitung 25 einem Regler 26 zugeführt, dem außerdem über einen Soll-Wert-Geber 27 ein Sollwert zugeführt wird. Der Regler 26 vergleicht den Istwert des Wegmeßsystems 24 mit dem Sollwert des Soll-Wert-Gebers 27. Tritt eine Differenz zwischen beiden Werten auf, wird vom Regler 26 ein entsprechendes Ausgangssignal erzeugt, das über einen Verstärker 28 dem Piezoelement 1 zugeführt wird. Dieses Regelsignal wird in Form einer Spannung dem Piezoelement 1 zugeführt, das sich entsprechend verformt und den Kolbenschieber 2 im gewünschten Sinne regelt. Durch Erhöhung der Spannung wird das Piezoelement 1 stärker durchgebogen, so daß der Kolbenschieber 2 über den Übertragungsstößel 11 gegen die Kraft der Feder 5 in Fig. 1 weiter nach links verschoben wird. Umgekehrt kann durch ein entsprechendes Spannungssignal die Verformung des Piezoelementes 1 verringert werden, so daß der Kolbenschieber 2 unter der Kraft der Druckfeder 5 in Fig. 1 aus der jeweiligen Betriebsstellung nach rechts verschoben wird. In beiden Fällen wird der Hauptkolben 23 so nachgestellt, daß der vorgegebene Wert aufrechterhalten bleibt.

Das Piezoelement 1 liegt innerhalb des Regelkreises bzw. der Regelschaltung 22. Das Piezoelement 1 in Verbindung mit dem Regelkreis 22 erlaubt nun, über einen verhältnismäßig großen Verschiebeweg des Kolbenschiebers 2 eine gewünschte Abhängigkeit zum Öldruck bzw. Förderstrom zu erreichen.

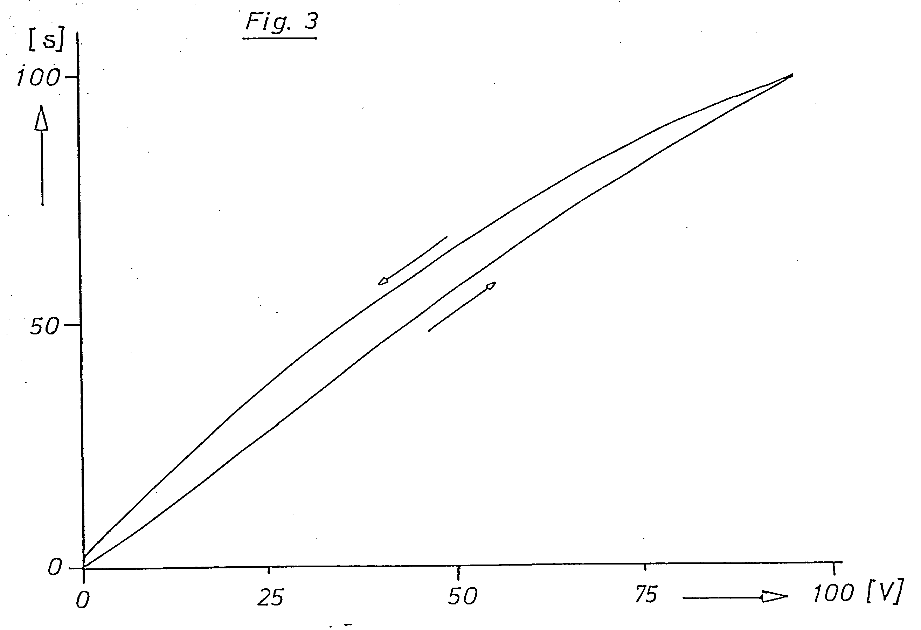

In Fig. 3 ist dargestellt, wie sich die Auslenkung des Piezoelementes von der jeweils aufgebrachten Spannung ändert. Die in Fig. 3 eingezeichneten Pfeile deuten an, daß die eine Kurve beim Hochfahren des Spannung und die andere Kurve beim Absenken der Spannung ermittelt worden ist. Deutlich ist die große Hysterese erkennbar, die das Piezoelement 1 aufweist. Trotz dieser verhältnismäßig großen Hysterese ist das Piezoelement 1 bei der beschriebenen Einrichtung hervorragend dafür geeignet, den Hauptkolben 23 des Hauptsteuerventils 21 äußerst exakt in seiner gewünschten Lage zu halten bzw. Lageveränderungen des Hauptkolbens 23 augenblicklich auszugleichen.

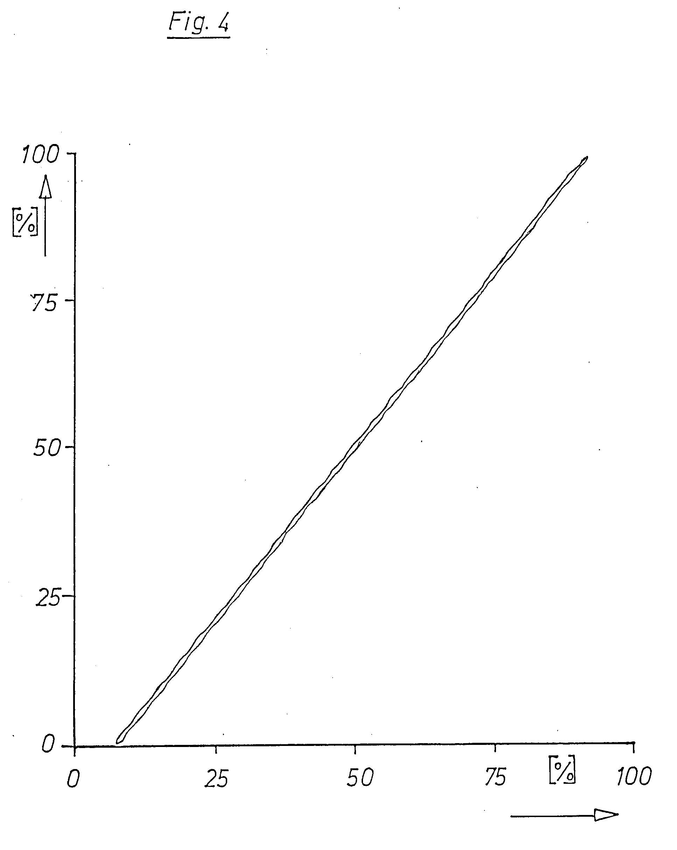

Dies wird aus Fig. 4 deutlich, in der der Istwert des Auslenkweges des Piezoelementes 1 in Abhängigkeit vom Spannungs-Sollwert, bezogen auf den Hauptkolben 23, dargestellt ist. Diese Kurven sind bei einem vorgegebenen Druck des Fördermediums aufgenommen worden.

Deutlich erkennbar ist, daß die Hysterese praktisch verschwunden ist, so daß Sollwert und Istwert nahezu identisch sind. Diese besonders vorteilhafte Wirkung ist darauf zurückzuführen, daß das Piezoelement 1 bei der beschriebenen Einrichtung im Regelkreis 22 liegt, mit dem es in der beschriebenen Weise möglich ist, den Hauptkolben 23 in idealer Weise sehr einfach in die jeweils gewünschte Position zu bringen und in ihr zu halten. Der Öldruck oder der Förderstrom können damit exakt und schnell eingestellt werden. Das Piezoelement 1 weist eine hohe Dynamik auf. Dadurch kann das Piezoelement 1 äußerst rasch den Gesamthub durchfahren. Dadurch ist es möglich, die anhand von Fig. 3 beschriebene Hysterese rasch auszugleichen. Das Piezoelement 1 kann auf Änderungen der jeweiligen Stellgröße äußerst rasch reagieren. Dadurch kann der Kolbenschieber 2 selbst auf kleinste Änderungen in der Stellgröße sofort reagieren, so daß der anzusteuernde Hauptkolben 23 unmittelbar im gewünschten Sinne verschoben wird, so daß der vorgegebene Sollwert des Hauptkolbens 23 exakt eingehalten wird.

Wird während des Betriebes der Einrichtung beispielsweise der anzusteuernde Hauptkolben 23 durch eine Störgröße bewegt, dann erfolgt über den beschriebenen Regelkreis 22 eine Rückmeldung zum Piezoelement 1. Die Bewegung des Hauptkolbens 23 wird vom Wegmeßsystem 24 festgestellt, das über die Ausgangsleitung 25 ein entsprechendes Ist-Wert-Signal abgibt, das im Regler 26 mit dem Soll-Wert-Signal verglichen wird. Dem Piezoelement 1 wird darum ein entsprechendes Regelsignal zugeführt, wodurch das Piezoelement in der beschriebenen Weise den Kolbenschieber 2 sofort so nachstellt, daß der vorgegebene Sollwert des Hauptkolbens 23 aufrechterhalten bleibt. Infolge der hohen Dynamik des Piezoelementes 1 erfolgt diese Nachreglung sofort, wodurch praktisch keine Hysterese mehr auftritt.

Neben der Ausregelung von Fehlern besteht auch noch eine systembedingte geringe Schmutzempfindlichkeit im Vergleich zur Servoventiltechnik. Das Piezoelement 1 reagiert infolge seiner verhältnismäßig hohen Steifigkeit sofort auf Änderungen des Sollwertes. Bei Verwendung des Piezoelementes 1 stört der in üblichen Hydrauliksystemen sich äußerst störend bemerkbar machende Schmutz nicht. Dieser Schmutzanfall kann bei den bekannten Ventilen dazu führen, daß sie ausfallen. Bei der beschriebenen Einrichtung bleibt die gewünschte und beschriebene nahezu ideale Abhängigkeit zwischen Spannung und Verstellweg auch bei Auftreten von Schmutz beibehalten. Wird beispielsweise der Hauptkolben 23 infolge von Schmutz nicht sogleich in seine Soll-Lage verschoben, dann wird über die beschriebene Regelschaltung 22 dem Piezoelement 1 das Regelsignal zugeführt und dementsprechend die Spannung so weit erhöht und das Piezoelement 1 so weit ausgelenkt, bis der Kolbenschieber 2 eine solche Lage erreicht hat, daß der Steuerdruck ausreicht, um den Hauptkolben 23 trotz Schmutzanfall in die Soll-Lage zu verschieben. Auch diese Regelung erfolgt infolge der hohen Dynamik des Piezoelementes 1 innerhalb kürzester Zeit, so daß praktisch keine Hysterese auftritt. In der Praxis liegt diese Nachregelzeit im Millisekundenbereich. Hieraus wird ersichtlich, welche große Dynamik das Piezoelement 1 aufweist.

Das Ventil V wird im beschriebenen Ausführungsbeispiel als Vorsteuerventil in Form eines Proportional-Ventiles verwendet. Es kann aber auch als Servoventil oder unmittelbar als Hauptstufenventil eingesetzt werden. Mit dem Ventil lassen sich Druck, Drehmomente, Geschwindigkeiten und dgl. durch Beeinflussung des Öldruckes und des Förderstromes des Öles beeinflussen. Als Regelgröße kann jede beliebige bekannte Größe herangezogen werden, z. B. die Geschwindigkeit, die Position, die Drehzahl und dgl. Das Piezoelement 1 in Verbindung mit der Regelschaltung 22 kann beispielsweise auch zur Bestimmung und Aufrechterhaltung der Lage eines Schlittens einer Bearbeitungsmaschine herangezogen werden.

In Fig. 4 haben die dargestellten Kurven etwa den Steigungswert 1. Die Steigung kann selbstverständlich auch einen anderen Wert haben. Auch ist eine lineare Abhängigkeit zwischen der Soll-Wert-Spannung und dem Ist-Wert-Verschiebeweg nicht notwendig. Es kann jede gewünschte Abhängigkeit eingestellt werden, also z. B. eine proportionale oder eine exponentielle Abhängigkeit. Auf jeden Fall ist bei sämtlichen Kurvenverläufen die Hysterese nahezu Null. Dadurch ist es auf optimale Weise möglich, die Einrichtung auf den jeweiligen Einsatzfall gezielt abzustimmen.

Mit dem Piezoelement 1 und der Regelschaltung 22 kann auch eine Reglung für den Kolbenschieber 2 erreicht werden. In diesem Falle werden beispielsweise auf dem Piezoelement 1 Dehnmeßstreifen aufgebracht, mit denen die Auslenkung des Piezoelementes einfach gemessen werden kann. Die Dehnmeßstreifen geben dann ein Ist-Wert-Signal ab, das dem Regler 26 zugeführt werden kann.

Zum Auslenken des Piezoelementes 1 ist nur eine geringe Energie notwendig. Mit dem Piezoelement 1 lassen sich hohe Stellkräfte bei entsprechender konstruktiver Gestaltung einfach erzeugen. Der Bewegungsablauf im quasistatischen Betrieb ist vibrationsfrei. Außerdem arbeitet das Piezoelement 1 nahezu verschleißfrei.

Das Piezoelement kann als bimorphes Scheibenelement aufgebildet sein, dessen radiale Schrumpfung sowie axiale Dehnung zur Erzeugung der Stellbewegung ausgenutzt wird. Das Piezoelement besteht vorzugsweise aus piezoelektrischen Keramiken und kann in Stapelbauweise ausgebildet sein. Hierbei kann das Piezoelement auch mit einer Hebelübersetzung versehen sein. Schließlich kann das Piezoelement in Form von Streifen oder als Röhrchen ausgebildet sein. Auch eine Ausbildung als bimorpher Streifen ist möglich.

Die Einrichtung kann anstelle des Vorsteuerventiles ein Drosselventil mit einem Kolben-, einem Flach- oder einem Drehschieber aufweisen. Ein solches Drosselventil kann insbesondere als Wegeventil ausgebildet sein, das mit zwei aktiven Steuerkanten versehen und zum Einsatz als Modulventil ausgebildet ist. Ebenso kann das Wegeventil auch vier aktive Steuerkanten aufweisen und zum Einsatz als Komplettventil ausgebildet sein.

Die Einrichtung kann zur direkten oder auch zur indirekten stetigen Beeinflussung von fluidischen Leistungsströmen ausgebildet sein. Dabei kann die Einrichtung den Steuerfluidstrom mittels eines Kolbenschiebers, eines Flachschiebers oder eines Drehschiebers beeinflussen. Die Einrichtung kann den Steuerfluidstrom auch mittels eines Düsen-Prallplatten-Systems beeinflussen. Zur Beeinflussung des Steuerfluidstromes kann auch eine Kugel oder ein Kegel mit einem zugehörigen Sitz vorgesehen sein.

Anstelle der Rückstellfeder 5 kann jedes andere geeignete, Rückstellkräfte erzeugende Element eingesetzt werden. Darüber hinaus ist es möglich, die Rückstellkräfte durch das Stellelement 2 selbst aufzubringen, wobei es dann direkt an den zu stellenden hydraulischen Widerstand angekoppelt ist.

Die Einrichtung kann als Druckmodulierventil ausgebildet sein, dessen Stellelement 2 getaktet angesteuert wird. Hierbei kann die Frequenz und/oder das Tastverhältnis variiert werden. Auf diese Weise läßt sich der fluidische Leitungsstrom direkt proprotional beeinflussen.

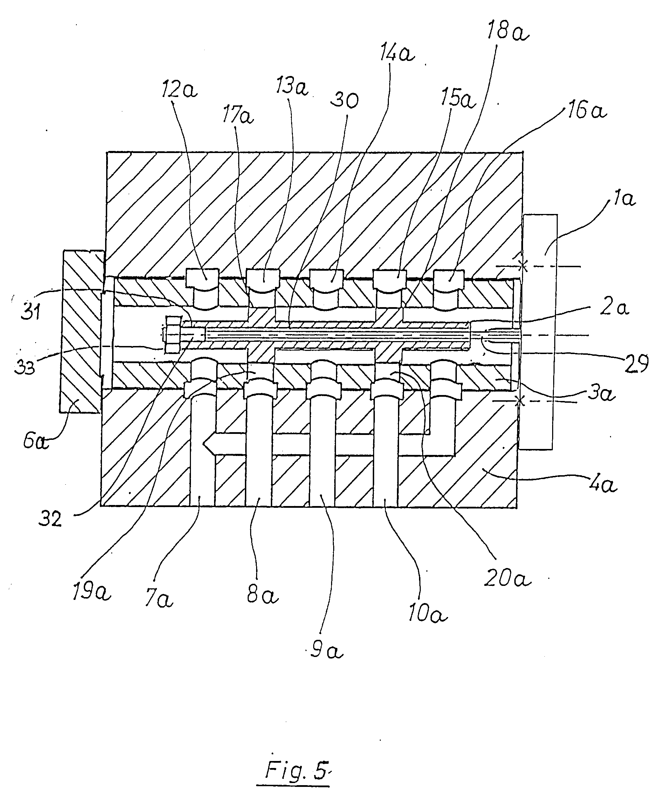

Das Ausführungsbeispiel gemäß Fig. 5 ist grundsätzlich gleich ausgebildet wie die Ausführungsform nach den Fig. 1 und 2. Es hat ebenfalls ein Gehäuse 4a, in dem sich eine Steuerbuchse 3a mit Steueröffnungen 19a und 20a befindet. In der Steuerbuche 3a ist der Kolbenschieber 2a mit Kolbenteilen 17a und 18a verschiebbar. Mit ihm können die Durchlaßquerschnitte der Steueröffnungen 19a und 20a verändert werden. Das Gehäuse 4a hat die Anschlüsse 7a bis 10a sowie die Ringkanäle 12a bis 16a.

Der Kolbenschieber 2a wird vom elektrisch ansteuerbaren Piezoelement 1a verstellt, das im Gegensatz zum vorigen Ausführungsbeispiel fest mit dem Kolbenschieber verbunden ist. Vom Piezoelement 1a steht ein Verbindungsteil 29 ab, das den Kolbenschieber 2a mit Spiel durchsetzt. Der Kolbenschieber 2a ist hierzu mit einer ihn zentrisch durchsetzenden Öffnung 30 versehen, die an dem vom Piezoelement 1a abgewandten Ende mit einem Gewindeabschnitt 31 versehen ist. Der Verbindungsteil 29 weist an seinem vom Piezoelement 1a abgewandten Ende einen verdickten Gewindeabschnitt 32 auf, auf den der Kolbenschieber 2a mit seinem Gewindeabschnitt 31 geschraubt ist. Somit kann der Kolbenschieber 2a durch Drehen axial in bezug auf das Verbindungsteil 29 stufenlos verstellt werden. Die Gewindeabschnitte 31, 32 haben sehr kleine Steigung, so daß sich der Kolbenschieber 2a durch Drehen sehr feinfühlig verstellen läßt. Auf das axial über den Kolbenschieber 2a ragende Ende des Gewindeabschnittes 32 des Verbindungsteiles 29 wird eine Mutter 33 geschraubt, um die eingestellte Lage des Kolbenschiebers zu fixieren.

Um den Kolbenschieber 2a gegenüber dem Verbindungsteil 29 verdrehen zu können, ist der Gehäuseabschluß 6a lösbar ausgebildet. Dann läßt sich das benachbarte Ende des Kolbenschiebers 2a, das eckig ausgebildet ist, mit einem entsprechenden Schlüssel mühelos gegenüber dem Verbindungsteil 29 verdrehen und damit axial verstellen. Anschließend kann die Mutter 33 ebenfalls mühelos zur Lagefixierung aufgeschraubt werden.

Da das Verbindungsteil 29 an dem vom Piezoelement 1a abgewandten Ende des Kolbeschiebers 2a befestigt ist, haben beide etwa gleiche Länge. Wenn der Kolbenschieber 2a und das Verbindungsteil 29 darüber hinaus aus Metall bestehen, haben beide Bauteile annähernd gleichen thermischen Ausdehnungskoeffizienten, so daß sich Wämedehnungen nicht oder nur unwesentlich auf die Verstellgenauigkeit auswirken.

Da das Piezoelement 1a nur einen sehr geringen Hub ausführt, ist eine hochgenaue Justagemöglichkeit für die Grundeinstellung des Kolbenschiebers 2a in bezug auf die Steuerbuchse 3a notwendig. Diese hochgenaue Justagemöglichkeit ist in der beschriebenen Weise sichergestellt. Insbesondere kann die Verstellung des Kolbenschiebers 2a auf dem Verbindungsteil 29 einfach durchgeführt werden, zumal diese Teile nach Abnehmen des Gehäuseabschlusses 6a gut zugänglich sind. Die Einstellung des Kolbenschiebers 2a erfolgt bei bereits fertig montiertem Ventil, da bei den erforderlichen Genauigkeiten in der Größenordnung von 10⁻³ mm eine Einstellung vor dem Einbau des Ventiles nicht zu erreichen wäre. Würde ein solches Ventil eingebaut, würde die zuvor eingestellte Lage des Kolbenschiebers 2a wieder verlorengehen.

Infolge des geringen Hubes des Piezoelementes 1a in der Größenordnung von wenigen 10⁻¹ mm sind extreme Genauigkeiten bei der geometrischen Position der Steuerkanten notwendig. Diese Steuerkantengenauigkeit kann hierbei über die hochgenauen Fenster in der Steuerbuchse 3 sowie durch den speziell darauf abgestimmten Kolbenschieber 2a erreicht werden. Infolge der hohen Einstellgenauigkeit kann die für ein gutes dynamisches Ansprechen im Regelkreis 22 sowie für eine hohe Druckverstärkung erforderliche Nullüberdeckung zwischen dem Kolbenschieber 2a und der Steuerbuchse 3a einwandfrei erreicht werden.

Zur Wirkungsweise des Ventiles nach Fig. 5 kann auf die Ausführungen zum vorigen Ausführungsbeispiel verwiesen werden.

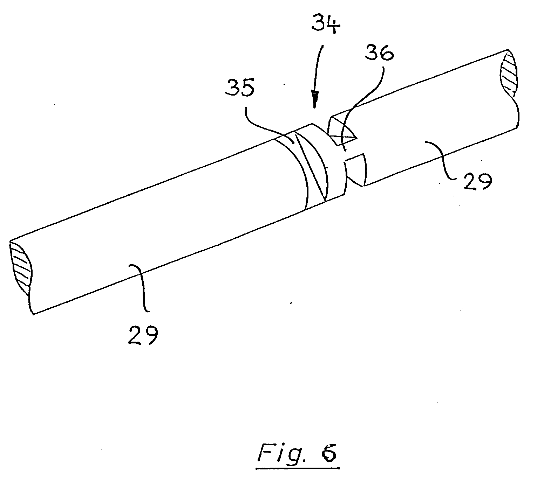

Damit ein querkraftfreier Antrieb des Kolbenschiebers und dadurch ein reibungs- und hysteresearmer Betrieb gewährleistet ist, erfolgt die direkte Anbindung des Kolbenschiebers 2a an das Piezoelement 1a über eine längssteife, aber biegeweiche Kupplungsstelle 34 (Fig. 6). Um die gewünschte Längssteifigkeit bei ausreichender Biegeweichheit zu erreichen, ist das stabförmige Verbindungsteil, das in das Piezoelement 1a geschraubt ist, an zwei axial mit Abstand nebeneinander liegenden Stellen im Querschnitt geschwächt ausgebildet. In diesem Falle sind die beiden Verschwächungen so ausgebildet, daß jeweils ein Diametralsteg 35 und 36 übrig bleibt, die winklig, im Ausführungsbeispiel rechtwinklig zueinander liegen. Dadurch wird einerseits erreicht, daß beim elastischen Biegen des Piezoelementes der Kolbenschieber 2a einwandfrei axial verstellt wird, daß aber auch die erforderliche Biegeweichheit gegeben ist, um einen evtl. Versatz des Piezoelementes 1a gegenüber dem Kolbenschieber 2a ausgleichen zu können.

## Patentansprüche

1. Einrichtung zur stetigen Beeinflussung eines Fluidstromes, mit einem den Fluidstrom steuernden Stellteil (2, 2a), das von mindestens einem Element (1, 1a) verstellbar ist, das in einem Regelkreis (22) liegt und einem Soll-Ist-Wert-Vergleicher (26) nachgeschaltet ist, dessen Ausgangssignal das Element (1, 1a) regelt,
dadurch gekennzeichnet, daß das Element ein Piezoelement (1, 1a) ist, das unter Vermeidung elastischer Zwischenglieder unmittelbar mit dem Stellteil (2, 2a) wirkverbunden ist.

2. Einrichtung nach Anspruch 1,
dadurch gekennzeichnet, daß das Piezoelement (1) mit einem Übertragungsstößel (11) am Stellteil (2) anliegt, der vorzugsweise in der Achse des Stellteiles (2) liegt.

3. Einrichtung nach Anspruch 1,
dadurch gekennzeichnet, daß das Piezoelement (1a) fest mit dem Stellteil (2a) verbunden ist.

4. Einrichtung nach Anspruch 3,
dadurch gekennzeichnet, daß das Stellteil (2a) eine ihn vorzugsweise zentrisch durchsetzende Öffnung (30) aufweist, die von mindestens einem Verbindungsteil (29) durchsetzt ist, das fest mit dem Piezoelement (1a) und dem Stellteil (2a) verbunden ist.

5. Einrichtung nach Anspruch 4,
dadurch gekennzeichnet, daß das Stellteil (2a) relativ zum Verbindungsteil (29) in Achsrichtung verstellbar ist, das Stellteil (2a) vorzugsweise mit Spiel durchsetzt.

6. Einrichtung nach Anspruch 4 oder 5,
dadurch gekennzeichnet, daß das Verbindungsteil (29) an dem vom Piezoelement (1a) abgewandten Ende des Stellteiles (2a) befestigt, vorzugsweise in das Stellteil geschraubt ist.

7. Einrichtung nach Anspruch 1 oder 3,
dadurch gekennzeichnet, daß das Stellteil (2a) über eine längssteife, biegeweiche Kupplungsstelle (34) mit dem Piezoelement verbunden ist, wobei vorzugsweise das Verbindungsteil (29) die Kupplungsstelle (34) aufweist, die durch Querschnittsverschwächungen des Verbindungsteiles gebildet ist.

8. Einrichtung nach einem der Ansprüche 1 bis 7,
dadurch gekennzeichnet, daß das Ausgangssignal des Vergleichers (26) verstärkt wird.

9. Einrichtung nach einem der Ansprüche 1 bis 8,
dadurch gekennzeichnet, daß das Piezoelement (1, 1a) in Stapelform, in Stapelform mit Hebelübersetzung, als Streifen, als Röhrchen, als Bimorph-Streifen oder dgl. ausgebildet ist.

10. Einrichtung nach einem der Ansprüche 1 bis 9,
dadurch gekennzeichnet, daß das Piezoelement (1, 1a) in einem Drosselventil vorgesehen ist, das einen Kolben-, Flach- oder Drehschieber aufweist, vorzugsweise als Wegeventil ausgebildet ist.

11. Einrichtung nach Anspruch 10,
dadurch gekennzeichnet, daß das Drosselventil zwei aktive Steuerkanten aufweist und zum Einsatz als Modulventil ausgebildet ist.

12. Einrichtung nach Anspruch 10,
dadurch gekennzeichnet, daß das Drosselventil vier aktive Steuerkanten aufweist und zum Einsatz als Komplettventil ausgebildet ist.

13. Einrichtung nach einem der Ansprüche 1 bis 12,
dadurch gekennzeichnet, daß die Einrichtung zur direkten Beeinflussung fluidischer Leistungsströme ausgebildet ist, wobei vorzugsweise das Piezoelement (1, 1a) mit mindestens einem Meßaufnehmer, insbesondere einem Dehnmeßstreifen oder dgl., versehen ist, der ein Ist-Wert-Signal an den Vergleicher (26) abgibt.

14. Einrichtung nach einem der Ansprüche 1 bis 12,
dadurch gekennzeichnet, daß die Einrichtung zur indirekten Beeinflussung fluidischer Leistungsströme als Pilotventil ausgebildet ist, wobei vorzugsweise die Einrichtung mindestens eine Kugel oder einen Kegel aufweist, die oder der in einem Ventilsitz liegt.

15. Einrichtung nach einem der Ansprüche 1 bis 14,
dadurch gekennzeichnet, daß die Einrichtung ein Druckregelventil (V, 21) aufweist, in dem das Piezoelement (1, 1a) angeordnet ist.

16. Einrichtung nach einem der Ansprüche 1 bis 15,
dadurch gekennzeichnet, daß die Einrichtung als Vorsteuerstufe (V) für ein Druckregelventil (21) eingesetzt wird.

17. Einrichtung nach einem der Ansprüche 1 bis 16,
dadurch gekennzeichnet, daß die Einrichtung ein Wegmeßsystem (24) aufweist, das im Regelkreis (21) liegt und ein Ist-Wert-Signal dem Vergleicher (26) zuführt.

18. Einrichtung nach einem der Ansprüche 1 bis 17,
dadurch gekennzeichnet, daß die Einrichtung als Druckmodulierventil ausgebildet ist, dessen Stellteil vorzugsweise getaktet angesteuert wird mit Variation von Frequenz und/oder Tastverhältnis.

19. Einrichtung nach einem der Ansprüche 1 bis 18,
dadurch gekennzeichnet, daß die gesamte benötigte Elektronik für Regler und Hochspannung innerhalb eines gemeinsamen Gehäuses mit dem Ventil angeordnet ist und dieser Elektronik von außen nur die Versorgungsspannung, das Sollwertsignal sowie Steuersignale zugeführt werden.

## Claims

1. Device for constantly influencing a fluid stream, with a control part (2, 2a) controlling the fluid stream, which control part can be adjusted by at least one element (1, 1a), which lies in a control circuit (22) and is connected at the output side of a reference/actual value comparator (26), whereof the output signal controls the element (1, 1a), characterised in that the element is a piezoelectric element (1, 1a), which has a direct operative connection to the control part (2, 2a) avoiding resilient intermediate members.

2. Device according to Claim 1, characterised in that the piezoelectric element (1) bears by a transmission plunger (11) against the control part (2), which preferably lies along the axis of the control part (2).

3. Device according to Claim 1, characterised in that the piezoelectric element (1a) is securely connected to the control part (2a).

4. Device according to Claim 3, characterised in that the control part (2a) comprises an opening (30) preferably passing centrally therethrough, which is penetrated by at least one connecting part (29), which is securely connected to the piezoelectric element (1a) and the control part (2a).

5. Device according to Claim 4, characterised in that the control part (2a) is able to move in the axial direction relative to the connecting part (29), which preferably penetrates the control part (2a) with clearance.

6. Device according to Claim 4 or 5, characterised in that the connecting part (29) is attached to the end of the control part (2a) remote from the piezoelectric element (1a), preferably is screwed into the control part.

7. Device according to Claim 1 or 3, characterised in that the control part (2a) is connected by way of a longitudinally rigid, flexible coupling point (34) to the piezoelectric element, the connecting part (29) preferably comprising the coupling point (34), which is formed by cross-sectional reductions of the connecting part.

8. Device according to one of Claims 1 to 7, characterised in that the output signal of the amplifier (26) is amplified.

9. Device according to one of Claims 1 to 8, characterised in that the piezoelectric element (1, 1a) is constructed in the form of a stack, in the form of a stack with lever transmission, as strips, as small tubes, as bimorph strips or the like.

10. Device according to one of Claims 1 to 9, characterised in that the piezoelectric element (1, 1a) is provided in a throttle valve, which comprises a sleeve valve, a flat slide valve or a rotary slide valve, and is preferably constructed as a directional valve.

11. Device according to Claim 10, characterised in that the throttle valve comprises two active control edges and is constructed for use as a modular valve.

12. Device according to Claim 10, characterised in that the throttle valve comprises four active control edges and is contructed for use as a complete valve.

13. Device according to one of Claims 1 to 12, characterised in that the device is constructed for directly influencing fluid output streams, whereby preferably the piezoelectric element (1, 1a) is provided with at least one measuring pick-up, in particular a wire strain gauge or the like, which sends an actual value signal to the comparator (26).

14. Device according to one of Claims 1 to 12, characterised in that the device for indirectly influencing fluid output streams is constructed as a pilot valve, the device preferably comprising at least one ball or cone, which is located in a valve seat.

15. Device according to one of Claims 1 to 14, characterised in that the device comprises a pressure-regulating valve (V,21), in which the piezoelectric element (1, 1a) is located.

16. Device according to one of Claims 1 to 15, characterised in that the device is used as an anticipatory control stage (V) for a pressure-regulating valve (21).

17. Device according to one of Claims 1 to 16, characterised in that the device comprises a position transducer (24), which is located in the control circuit (21) and supplies an actual value signal to the comparator (26).

18. Device according to one of Claims 1 to 17, characterised in that the device is constructed as a pressure-modulating valve, whereof the control part is preferably controlled cyclically with a variation of the frequency and/or keying ratio.

19. Device according to one of Claims 1 to 18, characterised in that the entire electronic equipment required for the regulator and high voltage is located within a common housing with the valve and this electronic equipment is supplied from outside with solely the supply voltage, the reference value signal and control signals.

## Revendications

1. Dispositif pour influencer constamment un flux de liquide, avec un élément de réglage (2, 2a), commandant le flux et pouvant être déplacé par un élément (1, 1a) au moins, qui se situe dans une boucle de régulation (22), en aval d'un comparateur de valeurs de consigne et effective (26), dont le signal de sortie règle l'élément (1, 1a), caractérisé en ce que l'élément est un élément piézo-électrique (1, 1a), qui concourt directement avec l'élément de réglage (2, 2a), sans organes élastiques intermédiaires.

2. Dispositif suivant la revendication 1, caractérisé en ce que l'élément piézo-électrique (1) s'applique sur l'élément de réglage (2) par un poussoir (11), qui se situe de préférence dans l'axe de l'élément de réglage (2).

3. Dispositif suivant la revendication 1, caractérisé en ce que l'élément piézo-électrique (1a) est solidaire de l'élément de réglage (2a).

4. Dispositif suivant la revendication 3, caractérisé en ce que l'élément de réglage (2a) présente une ouverture (30) qui le traverse, en son centre de préférence, et au travers de laquelle passe un élément de jonction (29) au moins, qui est assemblé fixement avec l'élément piézo-électrique (1a) et avec l'élément de réglage (2a).

5. Dispositif suivant la revendication 4, caractérisé en ce que l'élément de réglage (2a) peut se déplacer dans le sens axial par rapport à l'élément de jonction (29), qui traverse l'élément de réglage (2a) avec un jeu intermédiaire, de préférence.

6. Dispositif suivant l'une des revendications 4 et 5, caractérisé en ce que l'élément de jonction (29) est fixé sur l'extrémité de l'élément de réglage (2a), opposée à l'élément piézo-électrique (1a), est vissé dans l'élément de réglage, de préférence.

7. Dispositif suivant l'une des revendications 1 et 3, caractérisé en ce que l'élément de réglage (2a) est assemblé avec l'élément piézo-électrique par l'intermédiaire d'un point d'accouplement (34) rigide en longueur et souple en flexion, l'élément de jonction (29) présentant de préférence le point d'accouplement (34), formé par des affaiblissements de section de l'élément de jonction.

8. Dispositif suivant l'une quelconque des revendications 1 à 7, caractérisé en ce que le signal de sortie du comparateur (26) est amplifié.

9. Dispositif suivant l'une quelconque des revendications 1 à 8, caractérisé en ce que l'élément piézo-électrique (1, 1a) est réalisé en forme de piles, en forme de piles avec transmission par levier, sous forme de lame, de tube, de lame bimorphe, ou autres.

10. Dispositif suivant l'une quelconque des revendications 1 à 9, caractérisé en ce que l'élément piézo-électrique (1, 1a) est prévu dans une soupape d'étranglement, qui présente un tiroir à piston, un tiroir plan ou un tiroir rotatif, et qui est réalisée sous forme de distributeur, de préférence.

11. Dispositif suivant la revendication 10, caractérisé en ce que la soupape d'étranglement présente deux bords de commande actifs, et est conçue pour une utilisation sous forme de soupape modulaire.

12. Dispositif suivant la revendication 10, caractérisé en ce que la soupape d'étranglement présente quatre bords de commande actifs, et est conçue pour une utilisation sous forme de soupape intégrale.

13. Dispositif suivant l'une quelconque des revendications 1 à 12, caractérisé en ce que le dispositif est réalisé pour influencer directement des flux de liquide, l'élément piézo-électrique (1, 1a) étant de préférence muni d'un capteur de mesure au moins, d' une jauge de contrainte, ou autres, notamment, qui transmet un signal de valeur effective au comparateur (26).

14. Dispositif suivant l'une quelconque des revendications 1 à 12, caractérisé en ce que le dispositif est réalisé sous forme de soupape pilote pour influencer indirectement des flux de liquide, le dispositif présentant de préférence une bille ou un cône au moins, qui se situe dans un siège de soupape.

15. Dispositif suivant l'une quelconque des revendications 1 à 14, caractérisé en ce qu'il présente une soupape de régulation de pression (V, 21), dans laquelle est disposé l' élément piézo-électrique (1, 1a).

16. Dispositif suivant l'une quelconque des revendications 1 à 15, caractérisé en ce qu'il est utilisé comme étage pilote (V) pour une soupape de régulation de pression (21).

17. Dispositif suivant l'une quelconque des revendications 1 à 16, caractérisé en ce qu'il présente un capteur de déplacement (24), qui se situe dans la boucle de régulation (21) et transmet un signal de valeur effective au comparateur (26).

18. Dispositif suivant l'une quelconque des revendications 1 à 17, caractérisé en ce qu'il est réalisé sous forme de soupape de modulation de pression, dont l'élément de réglage est attaqué par impulsions, de préférence, avec une variation de fréquence et/ou du taux d'impulsions.

19. Dispositif suivant l'une quelconque des revendications 1 à 18, caractérisé en ce que la totalité de l'électronique requise pour le régulateur et la haute tension est disposée à l'intérieur d'une cage commune, avec la soupape, et en ce que seuls des signaux de commande, le signal de valeur de consigne, et la tension d'alimentation, sont transmis de l'extérieur à cette électronique.
